# EUROPEAN PATENT SPECIFICATION

(11) **EP 3 075 918 B1**
(45) Date of publication and mention of the grant of the patent: **04.03.2020**
(21) Application number: 16160788.2
(22) Date of filing: 17.03.2016
(51) Int. Cl.: E04B 1/80

(54) **INSULATION PRODUCT CONTAINING FIBER-BASED INSULATION**
ISOLATIONSPRODUKT MIT FASERBASIERTER ISOLIERUNG
PRODUIT D'ISOLATION CONTENANT UNE ISOLATION À BASE DE FIBRES

(30) Priority: 30.03.2015 FI 20155220
(43) Date of publication of application: 05.10.2016
(73) Proprietor: Paroc Group Oy, 00180 Helsinki (FI)
(72) Inventor: Fagerlund, Johanna, 21600 Parainen (FI); Bergman, Niklas, 21600 Pargas (FI); Karlsson, Dick, 21600 Parainen (FI); Lindberg, Pontus, 20780 Kaarina (FI); Rantala, Kimmo, 21600 Parainen (FI)
(74) Representative: LEITZINGER OY

(56) References cited:
- EP-A1- 1 541 916
- DE-U1-202011 050 485
- US-A- 3 264 165

## Description

### Object of the invention

The invention relates to an insulation product containing fiber-based insulation, having a reduced thermal conductivity.

Document US 3,264,165 discloses an insulation product containing a sheet metal-coated mineral wool insulation slab confined in a gas-tight space containing a gas with a thermal conductivity lower than that of air.

### Description of the invention

The insulation product according to the invention, as defined by claim 1, contains fiber-based insulation, wherein at least a portion of the fiber-based insulation is enclosed in a gastight space which contains at least one gas whose thermal conductivity is lower than that of air.

The insulation product of the invention contains fiber-based insulation, the pressure existing in the gastight space corresponds substantially to normal atmospheric pressure (about 1 atm).

The aforesaid at least one gas is selected from among carbon dioxide (CO₂), argon (Ar) and xenon (Xe). The gastight space has its walls at least partially consisting of a gastight multilayer laminate with at least one layer of aluminum, or of a metalized laminate. The laminates can be made from e.g. a plastic laminate material provided with a metal foil, of from a metalized plastic film.

The gas in the gastight space comprises preferably at least 50% of carbon dioxide (CO₂), more preferably at least 80% and most preferably at least 95% of carbon dioxide.

In an insulation product of the invention containing fiber-based insulation, the fiber-based insulation consists of mineral wool. The mineral wool has preferably a density not higher than 125 kg/m³. The mineral wool may consist of e.g. glass or stone wool.

In one specific preferred embodiment for an insulation product, not falling within the scope of the invention, containing fiber-based insulation, the mineral wool is in the form of a mineral wool slab which is completely enclosed in a gastight space.

In the insulation product of the invention containing fiber-based insulation, the insulation product is a sheet metal - coated mineral wool element, wherein between two large co-directional sheet metals are provided mineral wool lamellae with mineral wool fibers in a lengthwise orientation thereof being substantially perpendicular to said two large co-directional sheet metals, and that the gastight space is established between said two large codirectional sheet metals and the inside of two outermost lamellae in such a way that on the inside of at least the two outermost lamellae is provided a gastight membrane which is fastened in a gastight manner to said two large co-directional sheet metals. In another preferred embodiment, the gastight space has all of its walls consisting of metal or sheet metal.

### Detailed description of the invention

The invention will now be described in more detail with reference to the accompanying drawings, whereof
- fig. 1: shows in a cross-section view the structure of one embodiment for an insulation product of the invention containing fiber-based insulation,
- fig. 2: is a bar graph displaying thermal conductivity values at various times in one embodiment for an insulation product of the invention containing fiber-based insulation in comparison with a mineral wool product with air not replaced by any gas, and
- fig. 3: shows in a cross-section view the structure of another embodiment for an insulation product of the invention containing fiber-based insulation.

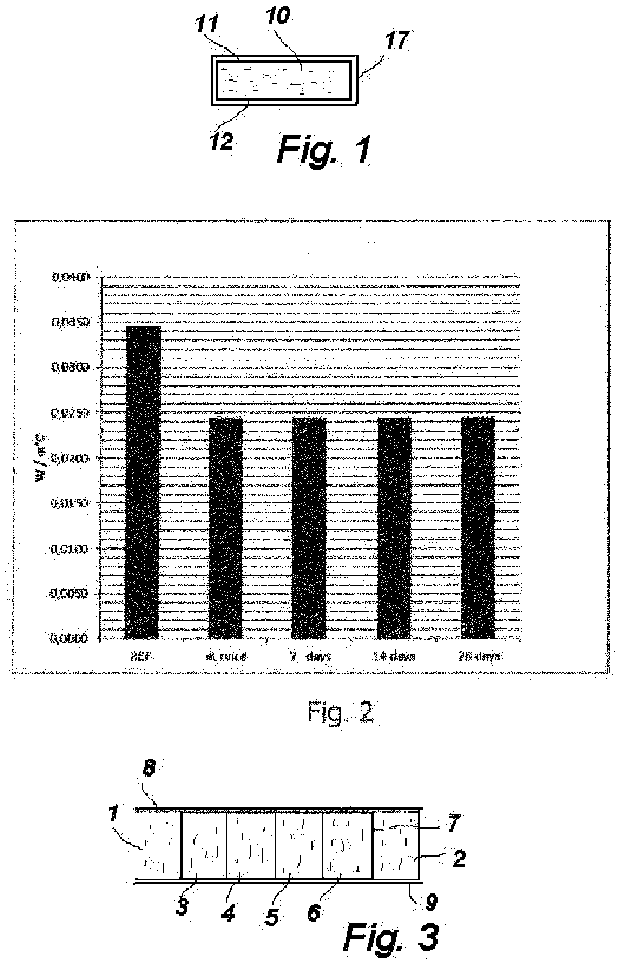

Fig. 1 shows in a cross-section view the structure of one embodiment for an insulation product of the invention containing fiber-based insulation. This embodiment consists of a mineral wool slab 10, wherein the fibers have an orientation which is substantially co-directional with main surfaces 11, 12 of the mineral wool slab. In this embodiment, the mineral wool slab 10 is made of stone wool but it can be optionally made of glass wool. Around the stone wool slab 10 is welded a gastight enclosure 17.

This invention has been tested for functionality in such a way that around the stone wool slab 10 was first welded the gastight enclosure 17 of metal-coated laminate, which comprises three metal-coated polyester films and a HDPE/MDPE heat-seal joint layer. In the process of welding it securely around the stone wool slab 10, the gastight enclosure 17 was left with a discharge opening by way of which into the enclosure was inserted a hose whereby inside the enclosure 17 was delivered carbon dioxide gas until the air inside had been replaced by carbon dioxide. After this, the discharge opening was also welded shut in a gastight manner. The pressure inside the gastight enclosure was normal atmospheric pressure (1 atm). The stone wool product, which was enclosed in a gastight manner inside the laminate with all its air having been replaced by carbon dioxide at normal atmospheric pressure, was measured for its thermal conductivity value at once, after 7 days, after 14 days, and after 28 days. As a reference, the thermal conductivity value was also measured for a corresponding product from which the air had not been removed. The measurement results are displayed in the bar graph of fig. 2. As can be seen from fig. 2, the replacement of air by carbon dioxide results in the thermal conductivity value being reduced by about 0.01 W/m°C, since the reference item (whose gas content consists of air) has a thermal conductivity value of about 0.0345 W/m°C and the product according to the invention, in which the air has thus been replaced by carbon dioxide, has a thermal conductivity value of about 0.0245 W/m°C. It can also been seen from fig. 2 that the stone wool product, enclosed in a gastight manner inside a laminate, has a good gas tightness as the thermal conductivity value of about 0.0245 W/m°C remains constant over the course of 28 days.

Fig. 3 shows another embodiment for an insulation product of the invention containing fiber-based insulation. The question is about a lamella slab, having a sheet metal skin 8, 9 and consisting of side-by-side stone wool lamellae 1, 2, 3, 4, 5, 6 between two sheet metals 8, 9. In a lengthwise orientation thereof, the stone wool fibers of the lamellae 1, 2, 3, 4, 5, 6 extend in a direction substantially perpendicular to the sheet metals 8, 9. All the lamellae, with the exception of two outermost lamellae 1 and 2, are jointly enclosed within the interior of a gastight enclosure 7. The gastight enclosure 7 can be constructed from a multilayer plastic laminate, or from a laminate which contains metal-coated foil or metal. As an example of the latter can be mentioned a metal-coated laminate, comprising three metal-coated polyester films and an HDPE/MDPE heat seal layer. Thus, a tight confinement of the lamellae (except for the two outermost lamellae 1 and 2) within the gastight enclosure 7 can be achieved by heat sealing.

Alternatively, a gastight enclosure for the lamellae 3, 4, 5, 6 of a sheet metal - coated element shown in fig. 1 can be implemented in such a way that on the inside of the outermost lamellae 1 and 2 is placed a gastight vertical membrane (not shown in the figure) which prevents escape of the gas. It is already prevented by the sheet metals 8, 9 as such.

The gastight space may have all of its walls made of metal or sheet metal as opposed to having been constructed from a multilayer material. Likewise, the location of a membrane or a side sheet metal in the sheet metal element can be other than on the inside of the outermost lamella.

The product may include confined areas, in which the air has been partially or completely replaced by some other gas whose thermal conductivity is lower than that of air, such as carbon dioxide. In such embodiments according to the invention, the gastight layers, such as e.g. membranes, are partially more shielded from the handling and thereby the susceptibility to damage is lesser than in embodiments which have the entire mineral wool layer confined within a gastight enclosure. Attachments of the product and attachments to the product can be carried out with traditional surface penetrating fasteners in those mineral wool fractions (e.g. stone wool) which have not been shielded inside a gastight enclosure.

## Claims

1. An insulation product containing fiber-based insulation, wherein at least a portion of the fiber-based insulation is confined in a gastight space which contains at least one gas whose thermal conductivity is lower than that of air, wherein the pressure existing in the gastight space substantially corresponds to normal atmospheric pressure (about 1 atm), wherein said at least one gas is selected from among carbon dioxide (CO₂), argon (Ar) and xenon (Xe), and wherein the insulation product is a sheet metal - coated mineral wool element, wherein between two large co-directional sheet metals (8, 9) are provided mineral wool lamellae (1, 2, 3, 4, 5, 6) with mineral wool fibers in a lengthwise orientation thereof being substantially perpendicular to said two large co-directional sheet metals, and that the gastight space is established between said two large co-directional sheet metals and the inside of two outermost lamellae (1, 2) in such a way that on the inside of at least the two outermost lamellae is provided a gastight vertical membrane or sheet metal which is fastened in a gastight manner to said two large co-directional sheet metals (8, 9).

2. An insulation product according to claim 1, **characterized in that** the gas in the gastight space comprises preferably at least 50% of carbon dioxide (CO₂), more preferably at least 80% and most preferably at least 95% of carbon dioxide.

3. An insulation product according to claim 1 or 2, **characterized in that** the membrane defining a gastight space consists at least partially of a gastight multilayer laminate with at least one layer of aluminum, or of a metalized laminate.

## Patentansprüche

1. Isolationsprodukt, das eine Isolierung auf Faserbasis enthält, wobei mindestens ein Teil der Isolierung auf Faserbasis in einem gasdichten Raum eingeschlossen ist, der mindestens ein Gas enthält, dessen Wärmeleitfähigkeit geringer ist als die von Luft, wobei der in dem gasdichten Raum vorhandene Druck im Wesentlichen dem normalen Atmosphärendruck (etwa 1 atm) entspricht, wobei das mindestens eine Gas aus Kohlendioxid (CO2), Argon (Ar) und Xenon (Xe) ausgewählt ist,
und wobei das Isolationsprodukt ein blechbeschichtetes Mineralwolleelement ist, wobei zwischen zwei großen gleichgerichteten Blechen (8, 9) Mineralwollelamellen (1, 2, 3, 4, 5, 6) mit Mineralwollefasern in einer Längsorientierung davon vorgesehen sind, die im Wesentlichen senkrecht zu den beiden großen gleichgerichteten Blechen ist, und dass der gasdichte Raum zwischen den beiden großen gleichgerichteten Blechen und der Innenseite von zwei äußersten Lamellen (1, 2) derart eingerichtet ist, dass an der Innenseite von mindestens den beiden äußersten Lamellen eine gasdichte vertikale Membran oder ein Blech vorgesehen ist, die bzw. das gasdicht an den beiden großen gleichgerichteten Blechen (8, 9) befestigt ist.

2. Isolationsprodukt nach Anspruch 1, **dadurch gekennzeichnet, dass** das Gas in dem gasdichten Raum vorzugsweise mindestens 50 % Kohlendioxid (CO2), besser mindestens 80 % und am besten mindestens 95 % Kohlendioxid enthält.

3. Isolationsprodukt nach Anspruch 1 oder 2, **dadurch gekennzeichnet, dass** die einen gasdichten Raum begrenzende Membran zumindest teilweise aus einem gasdichten Mehrschichtlaminat mit mindestens einer Schicht Aluminium oder aus einem metallisierten Laminat besteht.

## Revendications

1. Produit isolant contenant un isolant à base de fibres, dans lequel au moins une partie de l'isolant à base de fibres est confinée dans un espace étanche au gaz qui contient au moins un gaz dont la conductivité thermique est inférieure à celle de l'air, la pression régnant dans l'espace étanche au gaz correspondant substantiellement à la pression atmosphérique normale (environ 1 atm), ledit au moins un gaz étant sélectionné parmi le dioxyde de carbone (CO2), l'argon (Ar) et le xénon (Xe),
et le produit isolant est un élément en laine minérale revêtu de feuillards métalliques, dans lequel, entre deux feuillards métalliques codirectionnels de grande taille (8, 9), sont prévues des lamelles de laine minérale (1, 2, 3, 4, 5, 6) comportant des fibres de laine minérale dans une orientation longitudinale de celle-ci, qui sont substantiellement perpendiculaires auxdits deux feuillards métalliques codirectionnels de grande taille, et que l'espace étanche au gaz est établi entre lesdits deux feuillards métalliques codirectionnels de grande taille et l'intérieur de deux lamelles situées le plus à l'extérieur (1, 2) de manière à ce que, sur l'intérieur des au moins deux lamelles situées le plus à l'extérieur, il soit prévu une membrane verticale étanche au gaz ou un feuillard métallique qui est fixé de manière étanche au gaz audit deux feuillards métalliques codirectionnels (8,9) de grande taille.

2. Produit isolant selon la revendication 1, **caractérisé en ce que** le gaz contenu dans l'espace étanche au gaz comprend de préférence au moins 50 % de dioxyde de carbone (CO2), plus préférentiellement au moins 80 % et le plus préférentiellement au moins 95 % de dioxyde de carbone.

3. Produit isolant selon la revendication 1 ou 2, **caractérisé en ce que** la membrane définissant un espace étanche au gaz consiste au moins partiellement un laminé multicouche étanche au gaz comportant au moins une couche d'aluminium, ou en un laminé métallisé.
